# EUROPEAN PATENT SPECIFICATION

(11) **EP 2 277 025 B1**
(45) Date of publication and mention of the grant of the patent: **13.09.2017**
(21) Application number: 09739044.7
(22) Date of filing: 30.04.2009
(51) Int. Cl.: G01N 21/15, G01N 21/85, B08B 7/02, B08B 3/12

(54) **ACOUSTIC CLEANING OF OPTICAL PROBE WINDOW**
AKUSTISCHE REINIGUNG DES FENSTERS EINER OPTISCHEN SONDE
NETTOYAGE ACOUSTIQUE D'UNE FENÊTRE DE SONDE OPTIQUE

(30) Priority: 30.04.2008 NO 20082036
(43) Date of publication of application: 26.01.2011
(73) Proprietor: ProAnalysis AS, 5006 Bergen (NO)
(72) Inventor: SKEIDSVOLL, Jarle, 5282 Lonevåg (NO); ØVERLAND, Bjørn Atle, 5225 Nesttun (NO); MAGNUSSEN, Stian, 5034 Bergen (NO); TANGEN, Hallvard, 5034 Bergen (NO); ALFHEIM, Gunnar, 5004 Bergen (NO)
(74) Representative: Protector IP Consultants AS
(86) International application number: PCT/NO2009/000167
(87) International publication number: WO 2009/134145

(56) References cited:
- WO-A-2008/015390
- DE-A1- 4 333 560
- JP-A- 1 320 449
- JP-A- 4 332 852
- JP-A- 61 126 427
- US-B1- 6 324 900

## Description

This invention relates to a system comprising a cleaning system for measuring instruments measuring chosen characteristics of a fluid medium contained in a pipe or container, especially for optical measuring probes for water, oil and/or gas flows. More specifically, the invention relates to a system comprising a cleaning system for cleaning the window in front of an optical measuring probe being positioned in a fluid medium by actively removing deposits.

In performing measurements in multiphase flows such as water, oil and/or gas flows, it is a well known problem that deposits form on the probe surface being in contact with the flow. This is especially relevant for optical probes, e.g. performing fluorescence measurements in the flow, as the probes comprise a transparent window toward the flow. If this window is covered by deposits it must be cleaned before measurements may continue. This cleaning may be performed by removing the probe from the flow, but this may be impractical and time consuming, in some cases requiring a local shut down of the system.

Several suggestions have been made to clean the window in situ and even during operation. One solution is discussed in EP 1480764 where an optical system is used emitting laser pulses being able to remove deposits. The problem related to the EP publication is that some soft deposits occurring in some fluid types are not removed by the laser pulses. Thus the probe has to be removed at appropriate intervals for cleaning.

Another solution is discussed by Dr. Jens Bublitz et al. in "Adaptation of approved laser-induced time-resolved fluorescence spectroscopy in offshore applications: Experience of 24 months measurements in produced water", published on 7th Oil-in-Water Monitoring Workshop, 23-24 November 2005. In this publication tests are described where vibrations are used to remove deposits from a window in front of optical fibres used to perform fluorescence measurements. Two solutions have been tested. The first using a transducer coupled to the detection head so that both fibres and window are subject to vibrations. Thus has shown some practical problems such as the loss of the window and in practice Bublitz et al. have found a solution in which the window is glued into a recess in the head and an air jet is applied to the window to aid the deposit removal. The latter is impractical, as it, according to the publication, requires a second opening in the pipe and, additionally, may disturb or limit the flow. Another problem with said solution is that the optical fibres may be damaged by the vibrations.

A similar arrangement is shown in US application 2002/0167664 where the vibrations are provided by a piezoelectric ring element in the sensor head between the optical parts and the window. This complicates the probe head and makes it necessary to withdraw the probe in case of failure. Varying physical environments, e.g. varying temperature and pressure, may also represent a significant limitation to the design described in US application 2002/0167664.

An alternative solution according to the Bublitz et al. publication incorporates an acoustic transducer aiming its acoustic energy toward the probe head from another position in the pipe. This also requires two openings in the pipe wall, which may be impractical, either by requiring a special physical arrangement or limiting the freedom in positioning the probe as well as disturbing or limiting the fluid flow in the pipe.

Patent application WO 2008/015390 describes principles and embodiments of an optical interfacial element and an optical system integrated with a high power acoustic resonator where the high power acoustic resonator may be used for acoustically cleaning of the optical interfacial element by transmitting acoustic vibrations onto the optical interfacial element. In applications where high energy acoustic vibrations are required for cleaning the optical interfacial element, e.g. at high pressure, a full integration of the optical interfacial element with the acoustic resonator can result in physical erosion of the optical interfacial element, regardless of material.

It is an object of this invention to provide a simple solution for removing deposits from an optical measuring probe window without damaging the optical wave guides or other equipment therein and without requiring extra openings or surrounding systems complicating the installation and operation of the measuring probe.

This object is obtained using a system as stated above and characterised as mentioned in the accompanying independent claim. The invention thus provides a system where acoustic waves propagate along the probe shaft to the probe head. Preferably, signals transmitted from the probe head to the instruments outside the fluid through a member being acoustically insulated from the acoustical vibrations, preferably coaxially positioned inside the member transmitting the acoustic vibrations. Embodiments of the invention will be described below with reference to the accompanying drawings, illustrating the invention by way of examples.
Fig. 1 illustrates a system according to an embodiment of the invention.
Fig. 2 illustrates one embodiment of the probe head section of the system illustrated in fig. 1.
Fig. 3 illustrates a preferred embodiment of the probe head section of the system illustrated in fig. 1.

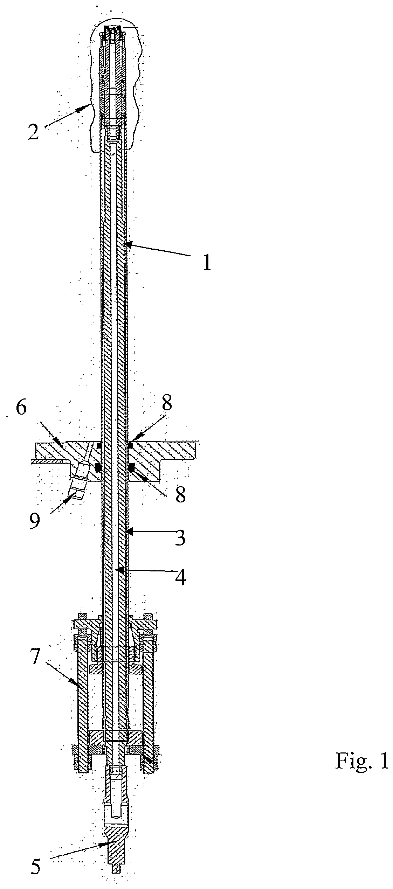

As is illustrated in figure 1 the invention relates to a probe 1 penetrating a pipe wall or container 6. The probe has a probe head 2 providing e.g. optical measurements in a medium contained in the pipe or container 6, and in the opposite end having mounting means 7 and connection means for the relevant instruments and control means. The pipe or container 6 may be of any type containing fluids, like mixtures of water, oil, gas, etc. where there is need for performing measurements and especially if there is a risk of deposits on the probe head interfering with the measurements to be performed. In figure 1 an additional opening 9 is provided in the wall, e.g. for pressure release purposes.

According to the invention the probe 1 is provided with an acoustic transducer 5 in the opposite end from the probe head 2. The probe includes an elongated member 3, and the acoustic transducer 5 excites the member and the acoustic waves propagate along it toward the probe head 2. In order to protect the signal transmitters to or from the probe head the elongated member 3 is preferably formed as an annular pipe with an inner channel 4 through with the transmission lines may be drawn. In figure 1 the probe 1 is connected to the container wall 6 through O-rings 8 or similar, sealing the through-hole. The elongated member 3 inside the probe is acoustically insulated from the outer shell of the probe 1 and thus also from the pipe or container wall 6, while the transmission lines and transducers inside the inner channel 4 are preferably acoustically insulated from the elongated member.

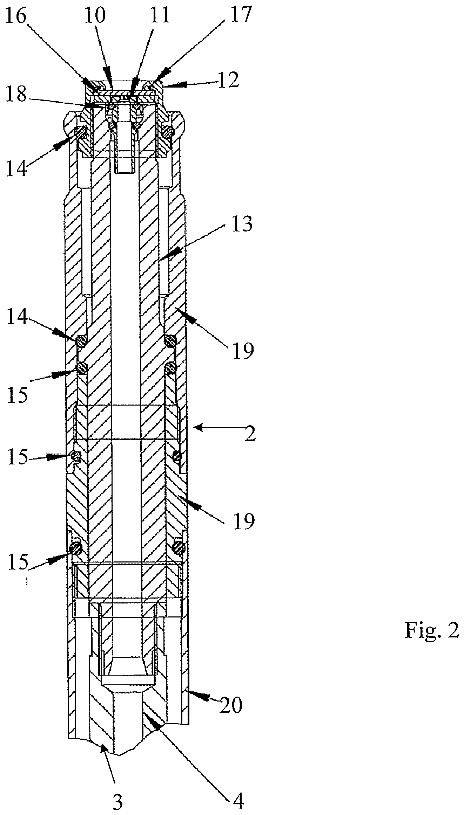

Figure 2 illustrates the probe head at the end of the elongated member 3,13. The elongated member 3 extends through the probe head 2 all the way to the end and is acoustically coupled to the oscillating front of the probe 12.

In the intended use of the invention the front surface 10 is a transparent window transmitting optical measuring signals from and to an optical gauge 11 behind the window and inside the probe head 2. The gauge 11 may be constituted by optical fibre ends transmitting light to or from the flow, a digital camera with light sources to provide images of the flow, etc. In order to reduce the acoustic vibrations propagating from the probe head 2,12 to the gauge 11 the gauge 11 is acoustically isolated from the elongated member 3 by O-rings 17,18 so that the elongated member 3 vibrates so as to remove the deposits on the window while the gauge 11 and corresponding signal and power conductors coupled in the channel 4 to the gauge 11 is exposed to a reduced amount of vibration and thus protected being against damage.

The elongated member 3,13 may as indicated in figure 1 and 2 be positioned inside an outer tube 19,20 which may provide a fluid seal and also acoustic insulation for the environment around the probe 1. In figure 2 the outer tube 19,20 is coupled to the elongated member by O-rings 14,15 or similar.

As the applied vibrations are preferably in the longitudinal mode the vibrations damping O-rings 14,15,17,18 and their mounts are preferably adapted to allow for vibration movements in the longitudinal direction of the probe while damping movements in the transversal direction. While exemplified as O-rings any device providing both vibration damping and seal may be used.

In figure 2 the window 10 is mounted at the end of the probe head 2 coupled to the gauge 11 but acoustically insulated from the elongated member 3. The outer edge 12 of the probe head is an extension of the elongated member 3,13 and may thus define a vibrating surface which so as to couple acoustic energy to the fluid in the vicinity of the probe window 10, the vibrations producing cavitation at the window 10 and thus remove deposits therefrom. Different types of sealing such as O-rings 17,18 may be used between the vibrating 12 and non-vibrating parts 10,11 to avoid intrusion of fluids into the probe.

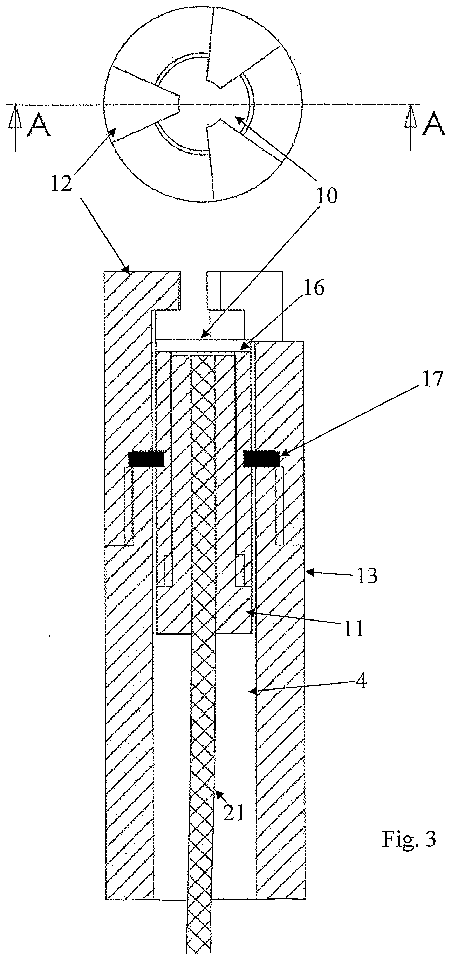

In figure 3 a preferred embodiment of the invention is shown in which the window 10 and the outer end 12 of the elongated member 3,13 is shown. The outer end 12 extends outside the window and as is shown in figure 3 it may be shaped so as to allow fluid flowing close to the window 10 while also extending over the window so as to focus a part of the acoustic energy toward the window surface. In figure 3 this is obtained by claw shaped extensions outside the window. The window is thus fastened to the gauge with suitable coupling means 16 or adhesives. In addition the gauge 11 is coupled to the inside of the elongated member 13 through sealing rings such as O-rings 17 that may both avoid introduction of fluids into the probe and reduce the acoustic vibrations propagating from the elongated member 13 to the gauge 11. In order to obtain this there is an annular space between the gauge 11 and the elongated member so as to let them move relative to each other to a certain degree.

The window 10 is preferably made from sapphire, but other hard transparent materials may be contemplated. Due to transmission characteristics for the acoustic energy and mechanical requirements due to chemical, mechanical and thermal conditions the metallic parts transmitting the acoustic energy 3, 13 are preferably made from titanium or alloys thereof. The outer parts are made from standard materials for the environment in which the equipment is to be used, such as duplex steel and/or other stainless steel alloys.

The acoustic source 5 may be chosen from a number of available types depending on the intended use and the local process environment including fluid content. types of contaminations and pressure. Preferably the frequency range is in the range of 20-30 kHz and the amplitude is up to 50 µm in the longitudinal direction.

To summarise the invention thus relates to a systems comprising means for removing deposits from measuring instruments or probes 1 measuring chosen characteristics of a fluid medium contained in a pipe or container 6. The measuring instrument comprising a first surface 10 having contact with said medium, the first surface being positioned on one end defining a probe head 2 of an elongated member 3 being adapted to be extending through the wall of said pipe or container. The outer end of the elongated member is positioned outside said wall and the cleaning system comprises an acoustical transducer 5 positioned on the outer end of said elongated member, wherein the acoustic transducer is acoustically coupled to the elongated member 3 so as to couple acoustic energy thereto, the acoustic energy propagating along said member to said first surface being in touch with the medium inside the pipe or container. The resulting vibrations applied on the end 12 of the probe head 2 being shaped so as to transmit part of the acoustic energy through the fluid to the window close by the probe head end thus by cavitations in the fluid removing any contaminations deposited on the window surface.

Preferably the measuring instrument comprised an inner element 21 positioned in a channel inside the elongated member 3 and being at least partially acoustically insulated from said elongated member so that the vibrations of the elongated member does not harm the inner element 21 or affect any signals propagating therein.

The inner element 11 may contains optical waveguides 21 extending from a position behind said first surface toward a measuring instrument outside said pipe or container, in which case the first surface is constituted by a window surface 10 being transparent to the optical signals transmitted though the waveguides. Alternatively, the inner element contains an optical sensing system, e.g. an imaging system, coupled through electronic or optical signal conductors so as to transmit signals from said imaging system to measuring instrument outside said pipe or container, the first surface being constituted by the outer surface of a window being transparent to the optical signals transmitted though the waveguides. Applications may also be contemplated where other measurements, like certain electric characteristics of the medium, is measured in which case the nature of the window will be chosen accordingly.

The acoustic energy used to clean the inner surface of the probe being in contact with the fluids in the pipe or container is preferably constituted by pressure waves propagating longitudinally along the elongated member thus providing vibrations to the inner surface of the probe head having an axial direction, the vibrations causing the extensions 12 on the probe head to vibrate and thus transmit the energy toward the window so that contaminations are removed.

## Claims

1. A system comprising: a measuring instrument for measuring chosen characteristics of a fluid medium contained in a pipe or container (6), the measuring instrument comprising :
an elongated member (3);
a first surface (10) being in contact with said fluid medium when measuring the chosen characteristics of said fluid medium;
said first surface (10) being positioned on one end defining a probe head (2) of said elongated member (3), wherein said elongated member (3) is adapter to extend through a wall of said pipe or container (6) into said fluid medium;
another end of said elongated member (3) opposite the end defining the probe head (2) being adapted to be positioned outside said wall;
the system comprising a cleaning system for removing deposits from the measuring instrument comprising an acoustical transducer (5) positioned on said other end of said elongated member (3), wherein said acoustic transducer (5) is acoustically coupled to the elongated member (3) so as to be able to couple acoustic energy thereto, the acoustic energy propagating in said member (3) to said first surface (10), wherein the probe head (2) is provided with a gauge (11) located in operational contact behind the first surface (10) through which the characteristics can be measured, wherein the gauge (11) is arranged to be acoustically insulated from the first surface (10), wherein a signal transmitter (21) for transmitting measurement signals from the gauge (11) out of the system for further processing is arranged coaxially inside the elongated member (3) and at least partially acoustically insulated from said elongated member (3).

2. The system according to claim 1, wherein the elongated member (3) is an annular pipe comprising an inner channel (4), wherein the signal transmitter (21) is arranged acoustically insulated from the walls of said channel (4).

3. The system according to claim 1, wherein the signal transmitter (21) comprises optical fibres.

4. The system according to claim 1, wherein the system further comprises an outer tube (19, 20), and wherein the elongated member (3) is located inside said outer tube (19, 20) providing fluid sealing and acoustical insulation around the system.

5. The system according to claim 1, wherein the system further comprises acoustical insulation elements (14, 15, 17, 18), and wherein said acoustical insulation elements (14, 15, 17, 18) are adapted to transmit acoustical waves in a same direction as the elongated member (3) while at the same time are damping acoustical waves in a transversal direction of said same direction as the elongated member (3).

6. The system according to claim 1, wherein an outer end (12) of the elongated member (3) is extended outside the first surface (10) and is bended towards a centre of the first surface (10).

7. The system according to claim 6, wherein a member of the measuring instrument comprising the first surface (10) is acoustically insulated from the elongated member (3).

8. The system according to claim 6 or 7, wherein a distance between the bended outer end (12) of the elongated member (3) and the first surface (10) is chosen to provide removal of contaminations on the first surface (10) when the acoustical transducer (5) is providing vibrations of the bended outer end (12) of the elongated member (3).

9. The system according to claim 6 or 7, wherein the outer end (12) of the elongated member (3) is shaped as at least one claw.

10. The system according to any preceding claim, wherein the first surface (10) is a surface of a member of the measuring instrument, said member being transparent.

11. The system according to claim 1, wherein the acoustic transducer (5) comprises an acoustical source providing signals in a frequency range of 20 - 30 kHz.

12. The system according to claim 1, wherein the acoustic transducer (5) comprises an acoustical source arranged to provide acoustical energy constituted by pressure waves propagating longitudinally along the body of the elongated member (3).

13. The system according to claim 12, wherein amplitudes of the pressure waves are in the range of 50 µm in the longitudinal direction of the elongated member (3).

## Patentansprüche

1. System folgendes aufweisend: ein Messinstrument zum Messen ausgewählter Merkmale eines fluiden in einem Rohr oder Behälter (6) enthaltenen Mediums, wobei das Messinstrument folgendes aufweist:
ein längliches Element (3);
eine erste Oberfläche (10), die in Kontakt mit dem fluiden Medium ist, wenn die ausgewählten Merkmale des fluiden Mediums gemessen werden;
wobei die erste Oberfläche (10) an einem Ende angeordnet ist, das einen Sondenkopf (2) des länglichen Elements (3) definiert, wobei das längliche Element (3) dazu ausgelegt ist, sich durch eine Wand des Rohres oder Behälters (6) in das fluide Medium zu erstrecken;
wobei ein anderes Ende des länglichen Elements (3) gegenüber dem Ende, das den Sondenkopf (2) definiert, dazu ausgelegt ist, außerhalb der Wand positioniert zu sein;
wobei das System, das ein Reinigungssystem zur Entfernung von Ablagerungen von dem Messinstrument aufweist, einen an dem anderen Ende des längliches Elements (3) positionierten akustischen Wandler (5) aufweist, wobei der akustische Wandler (5) akustisch mit dem länglichen Element (3) gekoppelt ist, so dass er in der Lage ist, akustische Energie damit zu koppeln, wobei sich die akustische Energie in dem Element (3) bis zu der ersten Oberfläche (10) ausbreitet,
wobei der Sondenkopf (2) mit einem in funktionellem Kontakt hinter der ersten Oberfläche (10) angeordneten Messgerät (11) bereitgestellt ist, durch das die Merkmale gemessen werden können, wobei das Messgerät (11) akustisch von der ersten Oberfläche (10) isoliert angeordnet ist, wobei ein Signaltransmitter (21) zur Übertragung von Messsignalen von dem Messgerät (11) aus dem System heraus zur weiteren Verarbeitung koaxial im Inneren des länglichen Elements (3) angeordnet und mindestens teilweise akustisch von dem länglichen Element (3) isoliert ist.

2. System nach Anspruch 1, wobei das längliche Element (3) ein ringförmiges Rohr ist, das einen Innenkanal (4) aufweist, wobei der Signaltransmitter (21) akustisch isoliert von den Wänden des Kanals (4) angeordnet ist.

3. System nach Anspruch 1, wobei der Signaltransmitter (21) optische Fasern aufweist.

4. System nach Anspruch 1, wobei das System weiterhin ein äußeres Rohr (19, 20) aufweist, und wobei das längliche Element (3) im Inneren des äußeren Rohrs (19, 20) angeordnet ist, das eine fluide Abdichtung und eine akustische Isolierung um das System herum bereitstellt.

5. System nach Anspruch 1, wobei das System weiterhin akustische Isolierelemente (14, 15, 17, 18) aufweist, und wobei die akustischen Isolierelemente (14, 15, 17, 18) dazu ausgelegt sind, akustische Wellen in der gleichen Richtung wie das längliche Element (3) zu übertragen, während sie zugleich akustische Wellen in einer Querrichtung dieser gleichen Richtung wie das längliche Element (3) dämpfen.

6. System nach Anspruch 1, wobei sich ein äußeres Ende (12) des länglichen Elements (3) außerhalb der ersten Oberfläche (10) erstreckt und hin zu einem Mittelpunkt der ersten Oberfläche (10) gekrümmt ist.

7. System nach Anspruch 6, wobei ein Element des Messinstruments, das die erste Oberfläche (10) aufweist, akustisch von dem länglichen Element (3) isoliert ist.

8. System nach Anspruch 6 oder 7, wobei ein Abstand zwischen dem gekrümmten äußeren Ende (12) des länglichen Elements (3) und der ersten Oberfläche (10) gewählt ist, um die Entfernung von Verunreinigungen auf der ersten Oberfläche (10) bereitzustellen, wenn der akustische Wandler (5) Schwingungen des gekrümmten äußeren Endes (12) des länglichen Elements (3) bereitstellt.

9. System nach Anspruch 6 oder 7, wobei das äußere Ende (12) des länglichen Elements (3) als mindestens eine Pratze geformt ist.

10. System nach einem der vorangehenden Ansprüche, wobei die erste Oberfläche (10) eine Oberfläche eines Elements des Messinstruments ist, wobei das Element transparent ist.

11. System nach Anspruch 1, wobei der akustische Wandler (5) eine akustische Quelle aufweist, die Signale in einem Frequenzbereich von 20-30 kHz bereitstellt.

12. System nach Anspruch 1, wobei der akustische Wandler (5) eine akustische Quelle aufweist, die angeordnet ist, um akustische Energie bereitzustellen, die durch Druckwellen gebildet ist, die sich in Längsrichtung entlang des Körpers des länglichen Elements (3) ausbreiten.

13. System nach Anspruch 12, wobei Amplituden der Druckwellen im Bereich von 50 µm in Längsrichtung des länglichen Elements (3) vorhanden sind.

## Revendications

1. Système comprenant : un instrument de mesure pour mesurer des caractéristiques choisies d'un milieu fluide contenu dans un tuyau ou récipient (6), l'instrument de mesure comprenant :
un élément allongé (3) ;
une première surface (10) étant en contact avec ledit milieu fluide lors de la mesure des caractéristiques choisies dudit milieu fluide ;
ladite première surface (10) étant positionnée sur une extrémité définissant une tête de sonde (2) dudit élément allongé (3), dans lequel ledit élément allongé (3) est adapté pour s'étendre à travers une paroi dudit tuyau ou récipient (6) dans ledit milieu fluide ;
une autre extrémité dudit élément allongé (3) opposée à l'extrémité définissant la tête de sonde (2) étant adaptée pour être positionnée à l'extérieur de ladite paroi ;
le système comprenant un système de nettoyage pour retirer les dépôts de l'instrument de mesure comprenant un transducteur acoustique (5) positionné sur ladite autre extrémité dudit élément allongé (3), dans lequel ledit transducteur acoustique (5) est acoustiquement couplé à l'élément allongé (3) de manière à pouvoir y coupler l'énergie acoustique, l'énergie acoustique se propageant dans ledit élément (3) jusqu'à ladite première surface (10),
dans lequel la tête de sonde (2) est pourvue d'une jauge (11) située en contact fonctionnel derrière la première surface (10) à travers laquelle les caractéristiques peuvent être mesurées, dans lequel la jauge (11) est agencée pour être acoustiquement isolée de la première surface (10), dans lequel un émetteur de signal (21) pour transmettre des signaux de mesure depuis la jauge (11) à l'extérieur du système en vue d'un autre traitement est agencé de manière coaxiale à l'intérieur de l'élément allongé (3) et au moins partiellement isolé acoustiquement dudit élément allongé (3).

2. Système selon la revendication 1, dans lequel l'élément allongé (3) est un tuyau annulaire comprenant un canal intérieur (4), dans lequel l'émetteur de signal (21) est agencé acoustiquement isolé des parois dudit canal (4).

3. Système selon la revendication 1, dans lequel l'émetteur de signal (21) comprend des fibres optiques.

4. Système selon la revendication 1, dans lequel le système comprend en outre un tube extérieur (19, 20), et dans lequel l'élément allongé (3) se situe à l'intérieur dudit tube extérieur (19, 20) assurant une étanchéité aux fluides et une isolation acoustique autour du système.

5. Système selon la revendication 1, dans lequel le système comprend en outre des éléments d'isolation acoustique (14, 15, 17, 18), et dans lequel lesdits éléments d'isolation acoustique (14, 15, 17, 18) sont adaptés pour transmettre des ondes acoustiques dans une même direction que l'élément allongé (3) tout en amortissant en même temps des ondes acoustiques dans une direction transversale de ladite même direction que l'élément allongé (3).

6. Système selon la revendication 1, dans lequel une extrémité extérieure (12) de l'élément allongé (3) est étendue à l'extérieur de la première surface (10) et est pliée vers un centre de la première surface (10).

7. Système selon la revendication 6, dans lequel un élément de l'instrument de mesure comprenant la première surface (10) est acoustiquement isolé de l'élément allongé (3).

8. Système selon la revendication 6 ou 7, dans lequel une distance entre l'extrémité extérieure pliée (12) de l'élément allongée (3) et la première surface (10) est choisie pour assurer l'élimination d'agents de contamination sur la première surface (10) quand le transducteur acoustique (5) fournit des vibrations de l'extrémité extérieure pliée (12) de l'élément allongé (3).

9. Système selon la revendication 6 ou 7, dans lequel l'extrémité extérieure (12) de l'élément allongé (3) est façonnée comme au moins une griffe.

10. Système selon une quelconque revendication précédente, dans lequel la première surface (10) est une surface d'un élément de l'instrument de mesure, ledit élément étant transparent.

11. Système selon la revendication 1, dans lequel le transducteur acoustique (5) comprend une source acoustique fournissant des signaux dans une plage de fréquences de 20-30 kHz.

12. Système selon la revendication 1, dans lequel le transducteur acoustique (5) comprend une source acoustique agencée pour fournir de l'énergie acoustique constituée par des ondes de pression se propageant longitudinalement le long du corps de l'élément allongé (3).

13. Système selon la revendication 12, dans lequel des amplitudes des ondes de pression se trouvent dans la plage de 50 µm dans la direction longitudinale de l'élément allongé (3).
